(19) Europäisches Patentamt
European Patent Office
Office européen des brevets

(11) Veröffentlichungsnummer: **0 142 689 B1**

(12) # EUROPÄISCHE PATENTSCHRIFT

(45) Veröffentlichungstag der Patentschrift: 18.01.89

(51) Int. Cl.⁴: C 08 G 77/14, C 08 G 18/06

(21) Anmeldenummer: 84111990.2

(22) Anmeldetag: 06.10.84

**E R R A T U M**

(SEITE, SPALTE, ZEILE)
(PAGE, COLUMN, LINE)
(PAGE, COLONNE, LIGNE)

| DIE TEXTSTELLE: / TEXT PUBLISHED: / LE PASSAGE SUIVANT: | | | | LAUTET BERICHTIGT: / SHOULD READ: / DEVRAIT ETRE LU: |
|---|---|---|---|---|
| $(CH_3)_3SiO\left[Si(CH_3)_2O\right]_a\left[\begin{matrix}SiCH_3O\\ \mid\\ H\end{matrix}\right]_b Si(CH_3)_3$<br>mit a = 34 / b = 8; a = 38 / b = 10 und a = 50 / b = 15<br>$H(CH_3)_2SiO\left[Si(CH_3)_2O\right]_a\left[\begin{matrix}SiCH_3O\\ \mid\\ H\end{matrix}\right]_b Si(CH_3)_2H$<br>mit a = 35 / 8<br>Allylpolyoxyalkylenether der Formel<br>$CH_2=CH-CH_2-O-C_2H_4O)_c(C_3H_6O)_d-H$<br>mit<br>c = 13,0 d = 0 ; 100 Gew.-% EO, Molgewicht 630<br>c = 9,7 d = 1,8; 80 Gew.-% EO, Molgewicht 590<br>c = 11,0 d = 8,4; 50 Gew.-% EO, Molgewicht 1030<br>c = 12,7 d = 13,3; 42 Gew.-% EO, Molgewicht 1390<br>$CH_2=CH-CH_2-O-(C_2H_4O)_c(C_3H_6O)_d-CH_3$ | 4 | 5/6 | 22/50 | 1 $(CH_3)_3SiO\left[Si(CH_3)_2O\right]_a\left[\begin{matrix}SiCH_3O\\ \mid\\ H\end{matrix}\right]_b Si(CH_3)_3$<br>mit a = 34 / b = 8; a = 38 / b = 10 und a = 50 / b = 15<br>2 $H(CH_3)_2SiO\left[Si(CH_3)_2O\right]_a\left[\begin{matrix}SiCH_3O\\ \mid\\ H\end{matrix}\right]_b Si(CH_3)_2H$<br>mit a = 35 / b = 8<br>Allylpolyoxyalkylenether der Formel<br>3 $CH_2=CH-CH_2-O-(C_2H_4O)_c(C_3H_6O)_d-H$<br>mit<br>c = 13,0 d = 0 ; 100 Gew.-% EO, Molgewicht 630<br>c = 9,7 d = 1,8; 80 Gew.-% EO, Molgewicht 590<br>c = 11,0 d = 8,4; 50 Gew.-% EO, Molgewicht 1030<br>c = 12,7 d = 13,3; 42 Gew.-% EO, Molgewicht 1390<br>4 $CH_2=CH-CH_2-O-(C_2H_4O)_c(C_3H_6O)_d-CH_3$ |

Tag der Entscheidung über die Berichtigung / Date of decision on rectification / Date de décision portant sur modification: 12.12.89

Ausgabe- und Veröffentlichungstag / Issue and publication date / Date d'edition et de publication: 28.2.90

Patbl.Nr / EPB no: / Bull. no: 90/09

(19) Europäisches Patentamt
European Patent Office
Office européen des brevets

(11) Veröffentlichungsnummer: **0 142 689**
**B1**

(12) **EUROPÄISCHE PATENTSCHRIFT**

(45) Veröffentlichungstag der Patentschrift: **18.01.89**

(51) Int. Cl.⁴: **C 08 G 77/14**, C 08 G 18/06

(21) Anmeldenummer: **84111990.2**

(22) Anmeldetag: **06.10.84**

(54) **Verfahren zur Herstellung von Polyurethanhartschäumen.**

(30) Priorität: **20.10.83 DE 3338106**

(43) Veröffentlichungstag der Anmeldung: **29.05.85 Patentblatt 85/22**

(45) Bekanntmachung des Hinweises auf die Patenterteilung: **18.01.89 Patentblatt 89/3**

(84) Benannte Vertragsstaaten: **BE DE FR GB IT**

(56) Entgegenhaltungen:
**EP-A- 0 069 338**
**DE-A- 1 694 366**
**DE-C- 3 234 462**

(73) Patentinhaber: **Th. Goldschmidt AG, Goldschmidtstrasse 100 Postfach 101461, D-4300 Essen 1 (DE)**

(72) Erfinder: **Kollmeier, Hans-Joachim, Dr., Barkhorstrücken 27, D-4300 Essen (DE)**
Erfinder: **Langenhagen, Rolf-Dieter, Kampstrasse 5, D-4321 Hattingen-Niederwenigern (DE)**

**EP 0 142 689 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Die Erfindung betrifft ein Verfahren zur Herstellung von Polyurethanhartschäumen aus mindestens difunktionellen Polyisocyanaten, Polyolen mit mindestens zwei Hydroxylgruppen je Molekül, deren Äquivalentgewicht je Hydroxylgruppe etwa 50 bis 800 beträgt, Katalysatoren, Treibmitteln und Polysiloxan-Polyoxyalkylen-Blockmischpolymerisaten als Schaumstabilisatoren sowie gegebenenfalls üblichen Zusatzmitteln.

Polyurethanhartschäume werden in grosser Menge nach an sich bekannten Verfahren und aus bekannten Rohstoffen hergestellt. Eine zusammenfassende Darstellung der verwendbaren Rohstoffe und der anwendbaren Verfahren ist in Ullmann «Enzyklopädie der technischen Chemie», 1980, Band 19, Seiten 301 bis 341, und Kunststoff-Handbuch, Band VII, Polyurethane von R. Vieweg und A. Höchtlen, Carl Hanser Verlag, München, 1966, Seiten 504 bis 544, sowie in «Polyurethane» Kunststoff-Handbuch 7 von G. Oertel, Carl Hanser Verlag, München, 1983, Seiten 246 bis 331, zu finden.

Polyurethanhartschäume werden vorzugsweise zur thermischen Isolierung verwendet. Dabei können sie zu Formteilen, wie beispielsweise Platten, verschäumt werden. Es ist auch möglich, Hohlräume aller Art auszuschäumen, wobei der in dem Hohlraum befindliche Schaum häufig als konstruktives Element auch tragende Eigenschaften haben muss. So ist es beispielsweise bekannt, Türen und Gehäuse von Kühlschränken oder die Hohlräume von Surfbrettern oder Bauelemente, Rohre und Automobilbauteile auszuschäumen. Bei der Ausschäumung wird der zu verschäumende Ansatz in den auszuschäumenden Hohlraum eingebracht. Der aufsteigende Schaum muss dabei den Hohlraum der Form feinzellig und gleichmässig ausfüllen, bevor er erhärtet. Häufig wird jedoch beobachtet, dass beim Ausschäumen von solchen Hohlräumen oder Formkörpern sich im Schaum Fehlstellen bilden. Derartige Fehlstellen können die Form kleiner Löcher oder Lunker haben. Häufig beobachtet man insbesondere in den Randbereichen zerstörte Zellstrukturen oder Stellen unterschiedlicher Schaumdichte. Hierdurch wird insbesondere der Verbund des Schaumes zur Fläche der Innenwand der Form geschwächt, so dass die mechanischen Eigenschaften des ausgeschäumten Formteiles insgesamt beeinträchtigt werden.

Es hat sich gezeigt, dass die Qualität und die Eigenschaften des gebildeten Hartschaumes in besonderem Masse von der Struktur und der chemischen Zusammensetzung des verwendeten Schaumstabilisators abhängen. Es sind deshalb bereits als Schaumstabilisatoren Polysiloxan-Polyoxyalkylen-Blockmischpolymerisate unterschiedlicher Struktur und unterschiedlicher Zusammensetzung beschrieben worden.

Als Polysiloxan-Polyoxyalkylen-Blockmischpolymerisate sind für den vorgenannten Zweck, z.B. in der DE-AS-1 719 238, gegen Hydrolyse beständige Siloxan-Oxyalkylen-Copolymerisate der allgemeinen Formel

$$(CH_3)_3SiO[(CH_3)_2SiO]_1\ [R(OC_2H_4)_x(OC_3H_6)_yO(CH_2)_z\overset{\displaystyle CH_3}{\overset{|}{Si}}-O]_p-Si(CH_3)_3$$

(1 = 3 bis 25; x = 1 bis 25; y = 0 bis 15; z = 2 oder 3; p = 1 bis 10; R = Wasserstoff oder Methyl) mit der Massgabe, dass mindestens 25 Gew.-% der Oxyalkylengruppen Oxyäthylengruppen sind und im Falle von R = H die Hydroxylgruppen mindestens 1,5 Gew.-% des Copolymerisats ausmachen, beschrieben worden.

Nach der DE-PS 2 029 293 verwendet man zur Herstellung von Polyurethanschaumstoffen als Schaumstabilisatoren siloxanmodifizierte Carbamidsäurederivate, die aus mindestens einer Struktureinheit der allgemeinen Formel

$$O_{\frac{3-m}{2}}Si(R')_m-\underset{\displaystyle R''}{\underset{|}{CH}}-\underset{\displaystyle R'''}{\underset{|}{N}}-\underset{\displaystyle O}{\underset{\|}{C}}-O-(C_nH_{2n}-O)_b-Q$$

und durch Si-O-Si-Brücken damit verbundenen weiteren Struktureinheiten der allgemeinen Formel

$$R_2'SiO_{2/2}$$

bestehen, wobei mindestens eine von tausend Struktureinheiten der erstgenannten Formel entspricht, und in denen

R′ einen gegebenenfalls halogen- oder cyansubstituierten $C_1$–$C_{10}$-Alkyl, $C_4$–$C_{10}$-Cycloalkyl- oder $C_6$–$C_{10}$-Arylrest,

R″ ein Wasserstoffatom oder einen Methyl- oder Phenylrest,

R‴ einen $C_1$–$C_{10}$-Alkyl-, $C_4$–$C_{10}$-Cycloalkyl-, $C_2$–$C_{10}$-Alkenyl-, $C_7$–$C_{10}$-Aralkyl-, Di-(C-$C_{10}$-alkyl)-amino-$C_1$–$C_{10}$-alkyl-, $C_6$–$C_{10}$-Aryl- oder $C_7$–$C_{10}$-Alkarylrest,

Q einen gesättigten $C_1$–$C_6$-Alkylrest oder $C_6$-Arylrest,

m 1 oder 2,

n 2, 3 oder 4 und

b eine ganze Zahl von 1 bis 200

darstellt, wobei diese Reste und Zahlenwerte an jeder Stelle einer Molekel unabhängig voneinander sind.

Weitere, besonders geeignete Polysiloxan-Polyoxyalkylen-Blockmischpolymerisate sind in der DE-PS 1 694 366 genannt. Dabei ist ein Verfahren zur Herstellung von Polyurethanschaumstoffen beansprucht, welches dadurch gekennzeichnet ist, dass man Polyoxyalkylen-Polysiloxan-Blockmischpolymerisate, deren Polysiloxanblock in an sich bekannter Weise aufgebaut ist, deren Polyoxyalkylenblock jedoch aus 25 bis 70 Gewichtsprozent eines Polyoxyalkylens mit einem durchschnittlichen Molekulargewicht von 1600 bis 4000 und einem Äthylenoxydgehalt von 20 bis 100 Gewichtsprozent, Rest Propylenoxyd und gegebenenfalls höhere Alkylenoxyde, und 30 bis 75 Gewichtsprozent eines Polyoxyalkylens mit einem durchschnittlichen Molekulargewicht von 400 bis 1200 und einem Äthylenoxydgehalt von 65 bis 100 Gewichtsprozent, Rest Propylenoxyd und gegebenenfalls höhere Alkylenoxyde, besteht, verwendet. Das Wesen dieses Patentes besteht somit darin, dass in dem Blockmischpolymerisat Polyoxyalkylenblöcke definierten unterschiedlichen Aufbaus und damit unterschiedlicher Hydrophilie enthalten sind.

Es hat sich jedoch in der Praxis gezeigt, dass die aus dem Stand der Technik bekannten Schaumstabilisatoren nicht in allen Fällen zu zufriedenstellenden Polyurethanhartschäumen führen, sondern dass immer wieder Fehler in den Randzonen beobachtet werden, welche die mechanischen Eigenschaften der ausgeschäumten Formkörper beeinträchtigen und auch die thermische Isolierung herabsetzen.

Der Erfindung liegt somit die Aufgabe zugrunde, ausgehend von dem vorgenannten Stand der Technik Schaumstabilisatoren zu finden, welche in besonderer Weise zur Herstellung von Polyurethanhartschäumen für Zwecke der Hohlraumausschäumung und der Formverschäumung geeignet sind.

Überraschenderweise wurde gefunden, dass man von der Lehre der DE-PS 1 694 366 ausgehend zu Polyurethanhartschäumen der gewünschten Eigenschaften gelangt, wenn man erfindungsgemäss als Polysiloxan-Polyoxyalkylen-Blockmischpolymerisate solche der Formel

$$B(CH_3)_2SiO-\left[Si(CH_3)_2O-\right]_a\left[\underset{A}{\underset{|}{Si}}CH_3O-\right]_b Si(CH_3)_2B \qquad I$$

worin

A über Kohlenstoff an Silicium gebundene Polyoxyalkylenblöcke $A^1$ oder $A^2$ der allgemeinen Formel $-R^2-O-C_mH_{2m}O)_yR^1$ bedeutet, wobei $R^1$ Wasserstoff oder ein Alkylrest mit 1 bis 4 Kohlenstoffatomen, $R^2$ eine verbrückende Gruppe ist, y eine ganze Zahl ist und m einen Wert von 2,0 bis 2,6 hat, mit der Bedingung, dass

a) die Blöcke $A^1$ aus 70 bis 100 Gew.-% Oxyethylen-, Rest Oxypropyleneinheiten bestehen und ein Molgewicht von 250 bis 1000 aufweisen,

b) die Blöcke $A^2$ aus 35 bis 65 Gew.-% Oxyethylen-, Rest Oxypropyleneinheiten bestehen und ein Molgewicht von 600 bis 1500 aufweisen,

c) das Molverhältnis der Blöcke $A^1$ zu den Blöcken $A^2$ 85:15 bis 15:85 beträgt, jedoch im durchschnittlichen Molekül mindestens je ein Block $A^1$ und $A^2$ vorhanden sind,

B ein Methylrest oder ein Polyoxyalkylenblock $A^1$ oder $A^2$ ist,

a einen Wert von 15 bis 150 hat und

b wenn B ein Methylrest ist, einen Wert von 5 bis 20, und wenn B gleich $A^1$ oder $A^2$ ist, einen Wert von 3 bis 18 hat,

verwendet.

Die bei dem erfindungsgemässen Verfahren zu verwendenden Schaumstabilisatoren sind somit durch eine Reihe von Merkmalen definiert:

Die Polyoxyalkylenblöcke befinden sich an einem linearen Methylpolysiloxan und sind seitenständig und gegebenenfalls endständig über Silicium-Kohlenstoff-Bindungen gebunden.

Die Anzahl der Dimethylsiloxyeinheiten im mittleren Molekül beträgt 15 bis 150, die Anzahl der Methylsiloxyeinheiten, welche die Polyoxyalkylenblöcke tragen, beträgt 5 bis 20, wenn B ein Methylrest ist. Ist B ein Block $A^1$ oder $A^2$, ist die Anzahl der Methylsiloxyeinheiten 3 bis 18. Vorzugsweise entspricht einem höheren Wert von b auch ein höherer Wert von a.

Die Polyoxyalkylenblöcke sind über Kohlenstoffatome an Silicium gebunden. Die verbrückende Gruppe ist meist eine Alkylengruppe mit vorzugsweise 3 Kohlenstoffatomen. Andere Verbindungsglieder sind aus dem Stand der Technik, z.B. aus der DE-PS 1 694 366, bekannt, haben jedoch wenig Einfluss auf die Eigenschaften der Stabilisatoren.

Ein wesentliches Merkmal der beim erfindungsgemässen Verfahrn zu verwendenden Stabilisatoren besteht darin, dass an das Siloxan seiten- und gegebenenfalls endständig die verschieden aufgebauten Polyoxyalkylenblöcke $A^1$ und $A^2$ gebunden sind. Die verhältnismässig hydrophilen Blöcke $A^1$ bestehen aus 70 bis 100 Gew.-% Oxyethylen- und 30 bis 0 Gew.-% Oxypropyleneinheiten und weisen ein Molgewicht von 250 bis 1000 auf. Die im Vergleich hierzu hydrophoberen Blöcke $A^2$ bestehen aus 35 bis 65 Gew.-% Oxyethylen- und 65 bis 35 Gew.-% Oxypropyleneinheiten und haben ein Molgewicht von 600 bis 1500. Das Molverhältnis der Blöcke $A^1$ zu den Blöcken $A^2$ beträgt 85:15 bis 15:85. Bei den Grenzwerten ist jedoch zu beachten, dass im durchschnittlichen Molekül mindestens je ein Block $A^1$ und $A^2$ vorhanden sein muss.

Die Verteilung der Oxyethylen- und Oxypropyleneinheiten in den Polyoxyalkylenblöcken kann statistisch oder blockweise vorliegen. Eine statistische Verteilung wird z.B. erhalten, wenn man an einen Startalkohol ein Gemisch von Ethylenoxid und Propylenoxid anlagert.

Die Polyoxyalkylenblöcke tragen als Endgruppen OH- oder $OR^1$-Gruppen, wobei $R^1$ eine Alkylgruppe mit 1 bis 4 Kohlenstoffatomen, z.B. die Methyl-, Ethyl-, Propyl- oder Butylgruppe ist. Es ist auch möglich, dass ein Teil der Polyoxyalkylenblöcke endständig $OR^1$-Gruppen und ein anderer Teil der Polyoxyalkylenblöcke OH-Gruppen als Endgruppen aufweist.

Bei der Herstellung von Polyurethanhartschäumen ist es häufig üblich, die als Schaumstabilisatoren eingesetzten Produkte vor der Verschäumungsreaktion in einen der beiden Ausgangsstoffe – Polyol oder Isocyanat – einzumischen. Wird

der Stabilisator in das zur Verschäumung eingesetzte Polyol eingemischt, sind als erfindungsgemässe Schaumstabilisatoren die Produkte bevorzugt, bei denen mindestens die Hälfte der Endgruppen der Polyoxyalkylenblöcke Hydroxylgruppen sind. Mit steigendem Gehalt an Hydroxylgruppen nimmt die Löslichkeit der Stabilisatoren in den Verschäumungspolyolen zu, wodurch ihre Mischbarkeit und Dosierbarkeit erleichtert wird.

Ist dagegen beabsichtigt, den zu verwendenden Schaumstabilisator mit der Isocyanatkomponente vorzumischen, sind Produkte bevorzugt, deren Polyoxyalkylenblöcke endständig $OR^1$-Gruppen aufweisen. Hydroxylendgruppen enthaltende Stabilisatoren können selbst in Abwesenheit von Katalysatoren mit Isocyanat reagieren, wodurch ihre stabilisierende Wirksamkeit vermindert wird.

Die beim erfindungsgemässen Verfahren zu vewendenden Schaumstabilisatoren der Formel I können in an sich bekannter Weise, z.B. nach der DE-PS 3 133 869, durch Addition von endständig olefinisch ungesättigte Gruppen aufweisenden Polyoxyalkylenethern an lineare Siloxane mit seiten- und gegebenenfalls endständigen SiH-Gruppen erhalten werden.

Nach dem erfindungsgemässen Verfahren erhält man Polyurethanhartschäume, welche insbesondere zu Hohlraumausschäumung und der Formverschäumung geeignet sind und die eine feinzellige, gleichmässige und auch in den Randzonen ungestörte Struktur aufweisen.

In den nachfolgenden Beispielen werden die erfindungsgemässe Herstellung derartiger Polyurethanhartschäume und deren Eigenschaften näher erläutert.

Beispiele

Zur Herstellung von erfindungsgemäss einzusetzenden Stabilisatoren werden folgende Ausgangsstoffe verwendet:

Hydrogenmethylpolysiloxane der Formel

$$(CH_3)_3SiO\left[Si(CH_3)_2O\right]_a\left[\underset{\substack{|\\ H}}{SiCH_3O}\right]_b Si(CH_3)_3$$

mit a=34 / b=8; a=38 / b=10 und a=50 / b=15

$$H(CH_3)_2SiO\left[Si(CH_3)_2O\right]_a\left[\underset{\substack{|\\ H}}{SiCH_3O}\right]_b Si(CH_3)_2H$$

mit a=35 / 8

Allylpolyoxyalkylenether der Formel

$$CH_2{=}CH{-}CH_2{-}O{-}C_2H_4O)_c(C_3H_6O)_d{-}H$$

mit

c=13,0 d= 0 ; 100 Gew.-% EO, Molgewicht 630
c= 9,7 d= 1,8; 80 Gew.-% EO, Molgewicht 590
c=11,0 d= 8,4; 50 Gew.-% EO, Molgewicht 1030
c=12,7 d=13,3; 42 Gew.-% EO, Molgewicht 1390

$$CH_2{=}CH{-}CH_2{-}O{-}(C_2H_4O)_c(C_3H_6O)_d{-}CH_3$$

mit c = 15,4 d = 11,6; 50 Gew.-% EO, Molgewicht 1420

Mit diesen Ausgangsstoffen wurden nach dem in der DE-PS 3 133 869 beschriebenen Verfahren Blockmischpolymerisate hergestellt, welche die in Tabelle 1 aufgezeigten Zusammensetzungen aufweisen.

Tabelle 1

| Stabilisator | Hydrogenmethylpolysiloxan Formel | a | b | Polyoxyalkylen $A^1$ Formel | Gew.-% EO | Mol.-Gew. | Polyoxyalkylen $A^2$ Formel | Gew.-% EO | Mol.-Gew. | Molverhältnis $A^1/A^2$ |
|---|---|---|---|---|---|---|---|---|---|---|
| I | 1 | 34 | 8 | 3 | 100 | 630 | 3 | 42 | 1390 | 60/ 40 |
| II | 1 | 38 | 10 | 3 | 100 | 630 | 4 | 50 | 1420 | 60/ 40 |
| III | 1 | 50 | 15 | 3 | 80 | 590 | 3 | 50 | 1030 | 30/ 70 |

Tabelle 1 (Fortsetzung)

| Stabilisator | Hydrogenmethylpolysiloxan Formel | a | b | Polyoxyalkylen $A^1$ Formel | Gew.-% EO | Mol.-Gew. | Polyoxyalkylen $A^2$ Formel | Gew.-% EO | Mol.-Gew. | Molverhältnis $A^1/A^2$ |
|---|---|---|---|---|---|---|---|---|---|---|
| IV | 2 | 35 | 8 | 3 | 100 | 630 | 4 | 50 | 1420 | 60/ 40 |
| V | 1 | 38 | 10 | 3 | 100 | 630 | – | – | – | 100/ 0 |
| VI | 1 | 38 | 10 | – | – | – | 3 | 42 | 1390 | 0/100 |
| VII* | 1 | 15 | 3 | 3 | 100 | 630 | – | – | – | 100/ 0 |

* Stabilisator VII wurde als Vergleichssubstanz gemäs DE-AS 1 719 238 hergestellt

Zum weiteren Vergleich gegenüber dem Stand der Technik wird ein Blockmischpolymerisat der Zusammensetzung A gemäss der DE-PS 2 029 293 (Stabilisator VIII) und ein Blockmischpolymerisat der Zusammensetzung von Substanz C gemäss Beispiel 1 der DE-PS 1 694 366 (Stabilisator IX) in die Überprüfung einbezogen.

Die Wirkungsweise der erfindungsgemässen Blockmischpolymerisate wird in den nachfolgend angegebenen Schaumformulierungen 1 und 2 untersucht. Dabei werden folgende Rohstoffe verwendet:

Polyol D:
Succrose/Glycerin gestartetes Propylenoxidpolyol mit einer Hydroxylzahl von 520

Polyol E:
Sorbit gestartetes Propylenoxidpolyol mit einer Hydroxylzahl von 450

Isocanat:
Polymeres Diphenylmethan-4,4'-diisocyanat mit einer Isocyanatzahl von 31 (Handelsame: rohes MDI)

Schaumformulierung 1

| | Gew.-Teile |
|---|---|
| Polyol D | 100 |
| $H_2O$ | 1,0 |
| Triethylamin | 3,0 |
| Trichlorfluormethan | 40 |
| Isocyanat | 155 |
| Stabilisator | 1,0 |

Schaumformulierung 2

| | Gew.-Teile |
|---|---|
| Polyol E | 100 |
| $H_2O$ | 2,0 |
| Dimethylcyclohexylamin | 2,4 |
| Trichlorfluormethan | 35 |
| Isocyanat | 144 |
| Stabilisator | 1,5 |

Die Polyurethanhartschäume werden nach üblichen Verschäumungsverfahren in einer Brettform mit den Ausmassen Länge 145 cm, Breite 14 cm, Dicke 4 cm hergestellt. Das zu verschäumende Reaktionsgemisch wird dabei in den unteren Teilen der um 45° geneigten Brettform eingetragen. Es werden jeweils zwei Versuche mit Unter- und Überfüllung durchgeführt. Um die Fliessfähigkeit der Schäume zu beurteilen, wird die Brettform um 10% unterfüllt. Die Auswertung der Randzonenstruktur und der Raumgewichtsverteilung erfolgt an Schaumbrettern, die mit etwa 10% Überfüllung hergestellt wurden.

Die Raumgewichtsverteilung wird bestimmt, indem in dem 145 cm langen Schaumbrett in der Mitte des unteren Dritels und in der Mitte des oberen Drittels das Raumgewicht bestimmt und daraus die Differenz ermittelt wird.

Die Ausbildung der Randzonen der Schäume wird in folgender Abstufung bewertet: gering –, mässig –, stark –, sehr stark verdichtet.

In Schaumformulierung 1 werden mit den erfindungsgemäss einzusetzenden Stabilisatoren im Vergleich zu den Produkten der Standes der Technik die in Tabelle 2 angegebenen Ergebnisse erhalten.

Tabelle 2 Stabilisatorvergleich in Formulierung 1

| Stabilisator | | Fliessfähigkeit cm | Raumgewichtsdifferenz kg/m³ | Beurteilung der Randzonen |
|---|---|---|---|---|
| I | erfindungsgemäss | 132 | 1,3 | schwach verdichtet |
| II | erfindungsgemäss | 133 | 1,4 | schwach verdichtet |
| III | erfindungsgemäss | 132 | 1,4 | gering verdichtet |
| IV | erfindungsgemäss | 134 | 1,0 | schwach verdichtet |
| V | nicht erfindungsgemäss | 129 | 2,7 | stark verdichtet |
| VI | nicht erfindungsgemäss | 131 | 2,4 | mässig verdichtet |
| VII* | nicht erfindungsgemäss | 132 | 2,3 | stark verdichtet |
| VIII** | nicht erfindungsgemäss | 133 | 2,2 | mässig verdichtet |
| IX*** | nicht erfindungsgemäss | 128 | 2,9 | stark verdichtet |

* = DE-AS 1 719 238 ** = DE-PS 2 029 293 *** = DE-PS 1 694 366

Die Ergebnisse zeigen, dass die erfindungsgemäss einzusetzenden Stabilisatoren ein ähnliches Fliessvermögen erbringen wie die Produkte des Standes der Technik, jedoch in der Raumgewichtsverteilung und in der Randzonenverdichtung deutlich überlegen sind. Die Stabilisatoren V und VI, die gleiche Polysiloxane, aber einen einheitlichen Polyetherblock enthalten, zeigen demgegenüber keinen technischen Vorteil.

In Schaumformulierung 2 ergeben die erfindungsgemäss einzusetzenden Stabilisatoren im Vergleich zu den Produkten des Standes der Technik die in Tabelle 3 gezeigten Ergebnisse.

Tabelle 3
Stabilisatorvergleich in Formulierung 2

| Stabilisator | | Fliessfähigkeit cm | Raumgewichts-differenz kg/m³ | Beurteilung der Randzonen |
|---|---|---|---|---|
| I | erfindungsgemäss | 139 | 1,1 | schwach verdichtet |
| II | erfindungsgemäss | 140 | 1,2 | mässig verdichtet |
| III | erfindungsgemäss | 140 | 0,9 | gering verdichtet |
| IV | erfindungsgemäss | 141 | 1,2 | schwach verdichtet |
| V | nicht erfindungsgemäss | 134 | 2,4 | sehr stark verdichtet |
| VI | nicht erfindungsgemäss | 138 | 2,2 | stark verdichtet |
| VII* | nicht erfindungsgemäss | 136 | 2,4 | mässig verdichtet |
| VIII** | nicht erfindungsgemäss | 141 | 2,0 | mässig verdichtet |
| IX*** | nicht erfindungsgemäss | 134 | 2,6 | sehr stark verdichtet |

* = DE-AS 1 719 238
** = DE-PS 2 029 293
*** = DE-PS 1 694 366

Die erfindungsgemäss zu verwendenden Blockmischpolymerisate ergeben auch in dieser Schaumformulierung ein gutes Fliessvermögen und gegenüber den Produkten des Standes der Technik sowie den Stabilisatoren V und VI, die einen einheitlichen Polyetherblock enthalten, eine deutliche Verbesserung der Randzonenausbildung und der Raumgewichtsverteilung.

**Patentanspruch**

Verfahren zur Herstellung von Polyurethanhartschäumen aus mindestens difunktionellen Polyisocyanaten, Polyolen mit mindestens zwei Hydroxylgruppen je Molekül, deren Äquivalentgewicht je Hydroxylgruppe etwa 50 bis 800 beträgt, Katalysatoren, Treibmitteln und Polysiloxan-Polyoxyalkylen-Blockmischpolymerisaten als Schaumstabilisatoren sowie gegebenenfalls üblichen Zusatzmitteln, dadurch gekennzeichnet, dass man als Polysiloxan-Polyoxyalkylen-Blockmischpolymerisate solche der Formel

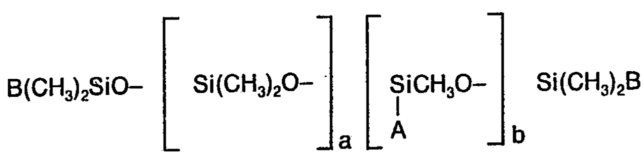

worin

A über Kohlenstoff an Silicium gebundene Polyoxyalkylenblöcke $A^1$ oder $A^2$ der allgemeinen Formel $-R^2-O-(C_mH_{2m}O)_yR^1$ bedeutet, wobei $R^1$ Wasserstoff oder einen Alkylrest mit 1 bis 4 Kohlenstoffatomen darstellt, $R^2$ eine verbrückende Gruppe ist, y eine ganze Zahl ist und m einen Wert von 2,0 bis 2,6 hat, mit der Bedingung, dass

a) die Blöcke $A^1$ aus 70 bis 100 Gew.-% Oxyethylen-, Rest Oxypropyleneinheiten bestehen und ein Molgewicht von 250 bis 1000 aufweisen,

b) die Blöcke $A^2$ aus 35 bis 65 Gew.-% Oxyethylen-, Rest Oxypropyleneinheiten bestehen und ein Molgewicht von 600 bis 1500 aufweisen,

c) das Molverhältnis der Blöcke $A^1$ zu den Blöcken $A^2$ 85:15 bis 15:85 beträgt, jedoch im durchschnittlichen Molekül mindestens je ein Block $A^1$ und $A^2$ vorhanden sind,

B ein Methylrest oder ein Polyoxyalkylenblock $A^1$ oder $A^2$ ist,

a einen Wert von 15 bis 150 hat und

b wenn B ein Methylrest ist, einen Wert von 5 bis 20, und wenn B gleich $A^1$ oder $A^2$ ist, einen Wert von 3 bis 18 hat,

verwendet.

**Claim**

Process for the preparation of rigid polyurethane foams from at least difunctional polyisocyanates, polyols which have at least two hydroxyl groups per molecule and the equivalent weight of which per hydroxyl group is about 50 to 800, catalysts, blowing agents and polysiloxane/polyoxyalkylene block copolymers as foam stabilizers and, if appropriate, conventional additives, characterized in that the polysiloxane/polyoxyalkylene block copolymers used are those of the formula

$$B(CH_3)_2SiO-\left[Si(CH_3)_2O-\right]_a\left[\begin{array}{c}SiCH_3O-\\|\\A\end{array}\right]_b Si(CH_3)_2B$$

wherein

A denotes polyoxyalkylene blocks $A^1$ or $A^2$, bonded via carbon to silicon, of the general formula $-R^2-O-(C_mH_{2m}O)_yR^1$,

$R^1$ representing hydrogen or an alkyl radical having 1 to 4 carbon atoms, $R^2$ being a bridging group, y being an integer and m having a value from 2.0 to 2.6, with the proviso that

a) the blocks $A^1$ consist of 70 to 100% by weight of oxyethylene units, the remainder being oxypropylene units, and have a molecular weight from 250 to 1000,

b) the blocks $A^2$ consist of 35 to 65% by weight of oxyethylene units, the remainder being oxypropylene units, and have a molecular weight from 600 to 1500, and

c) the molar ratio of the blocks $A^1$ to the blocks $A^2$ is 85:15 to 15:85, but at least one block of each $A^1$ and $A^2$ is present in an average molecule,

B is a methyl radical or a polyoxyalkylene block $A^1$ or $A^2$,

a has a value from 15 to 150 and

b has a value from 5 to 20 if B is a methyl radical, and has a value from 3 to 18 if B is identical to $A^1$ or $A^2$.

**Revendication**

Procédé pour la préparation de mousses rigides de polyuréthanne à partir de polyisocyanates au moins difonctionnels, de polyols comportant au moins deux groupes hydroxyle par molécule, dont la masse équivalente par groupe hydroxyle est d'environ 50 à 800, de catalyseurs, d'agents gonflants et de copolymères séquencés de polysiloxane-polyoxyalkylène servant de stabilisateurs de mousse, ainsi que, éventuellement, d'additifs habituels, caractérisé en ce qu'on utilise comme copolymères séquencés de polysiloxane-polyoxyalkylène ceux ayant la formule suivante:

$$B(CH_3)_2SiO-\left[Si(CH_3)_2O-\right]_a\left[\begin{array}{c}SiCH_3O-\\|\\A\end{array}\right]_b Si(CH_3)_2B$$

dans laquelle

A représente des blocs polyoxyalkylène $A^1$ ou $A^2$, liés à l'atome de silicium par l'intermédiaire d'un atome de carbone, et de formule générale $-R^2-O-(C_mH_{2m}O)_yR^1$, où $R^1$ représente un hydrogène ou un radical alkyle ayant de 1 à 4 atomes de carbone, $R^2$ est un groupe pontant, y est un nombre entier et m a une valeur de 2,0 à 2,6, à la condition que,

a) les blocs $A^1$ soient constitués pour 70 à 100% en poids de motifs oxyéthyléne, le reste étant constitué de motifs oxypropylène, et présentent une masse moléculaire de 250 à 1000,

b) les blocs $A^2$ soient constitués pour 35 à 65% de motifs oxyéthylène, le reste étant constitué de motifs oxypropylène, et présentent une masse moléculaire de 600 à 1500,

c) le rapport en moles entre les blocs $A^1$ et les blocs $A^2$ soit compris entre 85:15 et 15:85, au moins un bloc $A^1$ et un bloc $A^2$ étant présents dans la molécule moyenne,

B est un radical méthyle ou un bloc polyoyyalkylène $A^1$ ou $A^2$,

a vaut de 15 à 150, et

b, quand B est un radical méthyle, vaut de 5 à 200 et, quand B est $A^1$ ou $A^2$, vaut de 3 à 18.